# EUROPEAN PATENT APPLICATION

(11) **EP 0 733 330 A1**
(43) Date of publication of application: **25.09.1996**
(21) Application number: 95104262.1
(22) Date of filing: 23.03.1995
(51) Int. Cl.: A47J 41/00

(54) **Synthetic resin insulating vessel and manufacturing method for the same**

(71) Applicant: NIPPON SANSO CORPORATION, Minato-ku, Tokyo (JP)
(72) Inventor: Yamada, Masashi, c/o Nippon Sanso Corporation, Minato-ku, Tokyo (JP); Ito, Seiichi, c/o Nippon Sanso Corporation, Minato-ku, Tokyo (JP); Komiya, Yasuhiko, c/o Nippon Sanso Corporation, Minato-ku, Tokyo (JP)
(74) Representative: Munk, Ludwig, Dipl.-Ing.

(57) **Abstract**

The present invention relates to a synthetic resin insulating vessel (12) including insulating containers used as thermos bottles, heat insulating lunch boxes, cooler boxes, and the like, and manufacturing method for the same. The synthetic resin insulating vessel (12) according to the present invention is formed from an inner wall (17) of synthetic resin, an outer wall (18) of synthetic resin, and a space formed in between the aforementioned inner wall and outer wall, wherein a sealed hollow layer (19) is formed by filling the aforementioned space using at least one type of gas selected from the group consisting of argon gas, xenon gas, and krypton gas. This synthetic resin insulating vessel is manufactured, for example, by means of a blow molding method in which the aforementioned gas is injected into a parison and/or by means of an injection molding process.

## Description

### Background of the Invention

### Field of the Invention

The present invention relates to a synthetic resin insulating vessel including insulating containers employed as thermos bottles, heat insulating lunch boxes, cooler boxes, and the like, and manufacturing method for the same.

### Relevant Art

Conventionally, as insulating (adiabatic) containers, insulating containers are know which possess a double-walled structure comprising an outer container and inner container formed from synthetic resin in which the space formed between the inner container and outer container is filled with an organic foam such as a hard urethane foam, polystyrene foam, or the like, compact, and/or powdered inorganic substance such as perlite or the like.

In addition, vacuum insulating containers are also know which possess a double-walled structure comprising an outer container and inner container formed from a metal (mainly stainless steel) wherein the space formed between the inner container and outer container is vacuum evacuated to form a vacuum insulating layer.

However, in the aforementioned conventional insulating containers, with regard to the insulating container formed from a synthetic resin, due to the large thermal conductivity of the filling material, in order to increase the insulating properties therein, it is necessary to increase the thickness of the insulating layer (distance between the inner container and outer container) to above a certain level. In addition, at the time of filling a filler in the insulating layer, in order to increase the efficiency of this filling operation, an insulating layer of a certain thickness is required, thereby presenting problems in that when compared with the thickness of the insulating layer of a conventional vacuum insulating container, the aforementioned thickness is increased by 5 to 10 times. As a result, this type of conventional insulating container displays a poor volumetric efficiency and is hence unsatisfactory for portable use.

On the other hand, in the case of the metal vacuum insulating container above, although superior insulating properties are obtained even when the thickness of the insulating layer is small - thereby meeting the demands for portable use - the manufacturing method therein is complex and thus leads to high costs (i.e., manufacture of an expensive product). In addition, other problems exist in that in a structure possessing a vacuum insulating layer between an inner container and outer container, this portion is exposed to a large atmospheric pressure, which in turn limits the shape of the product.

### Summary of the Invention

In consideration of the aforementioned, it is an object of the present invention to provide an insulated vessel formed from synthetic resin possessing the above superior insulating properties and volumetric efficiency which can be manufactured at a low cost, and manufacturing method for the same.

The synthetic resin insulating vessel of the present invention is characterized in comprising:
an inner wall formed from synthetic resin;
an outer wall formed from synthetic resin; and
a space formed in between said inner wall and said outer wall;
wherein a sealed hollow layer is formed by means of filling said space using at least one type of gas selected from the group consisting of argon gas, xenon gas, and krypton gas.

In addition, according to another aspect of the present invention, a synthetic resin insulating vessel is provided which is characterized in comprising:
an inner container formed from synthetic resin;
an outer container formed from synthetic resin; and
a synthetic resin double-walled container integrally formed by means of providing a space between said inner container and said outer container;
wherein a sealed hollow layer is formed by means of filling said space using at least one type of gas selected from the group consisting of argon gas, xenon gas, and krypton gas.

The synthetic resin insulating vessel of the present invention is characterized in that the distance between the inner wall and the outer wall is not greater than 5 mm.

The method for manufacturing a synthetic resin insulating vessel according to the present invention is characterized in comprising the steps of:
extruding a molding material into a tubular shape to form a parison;
injecting at least one type of gas selected from the group consisting of argon gas, xenon gas, and krypton gas into the interior of said parison;
sandwiching said parison between a pair of molds; and
sealing the system to form a synthetic resin vessel possessing a double-walled structure comprising an inner wall, outer wall, and sealed hollow layer of said gas formed in between said inner wall and said outer wall.

In the method of the present invention it is also possible to form a synthetic resin insulating vessel by executing the steps of:
distributing a molten synthetic resin into a forming mold;
injecting at least one type of gas selected from the group consisting of argon gas, xenon gas, and krypton gas into said molten synthetic resin; and
sealing and cooling therein to form a synthetic resin vessel possessing a double-walled structure comprising an inner wall, outer wall, and sealed hollow layer of said gas formed between said inner wall and said outer wall.

According to the present invention, a sealed hollow layer comprising a gas of a low thermal conductivity such as argon gas, xenon gas, krypton gas or a mixed gas thereof, is provided in the space formed in a two-walled structure possessing an inner wall and outer wall formed from a synthetic resin. Therefore, according to the present invention, an insulating vessel is obtained possessing superior insulating effects when compared with a synthetic resin vessel employing the conventional urethane in the insulating layer. In addition, in the case when a container is formed by means of the insulating vessel above, it is possible to reduce the thickness of the insulating layer by 50% or more when compared with the conventional resin insulating container while also maintaining equal or superior insulating properties. Thus, it is possible to provide an insulating vessel in which the volumetric efficiency is increased.

Furthermore, according to the structure of the present invention, unlike in the vacuum insulating system of the conventional art, there is no bearing of atmospheric pressure; thus, it is possible to provide insulating vessels and insulating containers possessing various shapes from angular molds and the like.

Additionally, since the distance between the inner wall and outer wall is limited to 5 mm or less, even when the space between the inner wall and the outer wall is filled with argon gas, krypton gas, xenon gas, or mixed gas thereof, it is possible to prevent convection of these gases. As a result, it is possible to provide a synthetic resin insulating vessel possessing superior insulating properties wherein convective heat transfer in the sealed hollow layer is decisively prevented.

Similarly, according to the method of the present invention, an insulating vessel comprising a double-walled structure and possessing a sealed hollow layer is formed while injecting gas of a low thermal conductivity, i.e., argon gas, krypton gas, xenon gas, or a mixed gas thereof into the interior of the parison formed in a tubular shape or into the molten synthetic resin injected into the interior of the mold, thus it is possible to generate superior insulating properties when compared with a resin insulating vessel employing the conventional urethane in the insulating layer. In this manner, it is possible to reduce the thickness of the insulating layer by 50% or more, while also maintaining equal or superior insulating properties when compared with the conventional resin insulating container; thus, the volumetric efficiency is increased in the case when a container is formed as the insulating vessel of the present invention.

Furthermore, the manufacturing method for forming the insulating container is simpler than that for the conventional vacuum insulating container, and hence, it is possible to manufacture an inexpensive product. As a result, it is possible to provide an inexpensive insulating vessel, and also provide an insulating container which can be manufactured less expensively and at a lighter weight than the conventional insulating container which is filled with the powder of an inorganic substance. Finally, there is no bearing of atmospheric pressure such as in a vacuum insulating system, and thus, it is possible to provide insulating vessels or insulating containers possessing a variety of shapes from angular molds and the like.

### Brief Descriptions of the Drawings

Fig. 1 shows a cross sectional view of a parison positioned in between a pair of metal molds.

Fig. 2 is a cross sectional view showing a swollen state of the parison shown in Fig. 1.

Fig. 3 is a cross sectional view showing a state in which the parison of Fig. 2 is further swelled.

Fig. 4 is a cross sectional view showing the state in which the swollen parison is sandwiched by means of the metal molds.

Fig. 5 is a side view showing a cross section of a portion of synthetic resin insulating container.

Fig. 6 is a cross sectional view showing a state in which a molten synthetic resin is poured into an injection mold during injection molding.

Fig. 7 is a cross sectional view showing a state in which a gas is injected into an injection mold during injection molding.

### Detailed Description of the Preferred Embodiments

In the following, the present invention will be explained in greater detail using an example in which a synthetic resin insulating double-walled container is manufactured using a blow molding process.

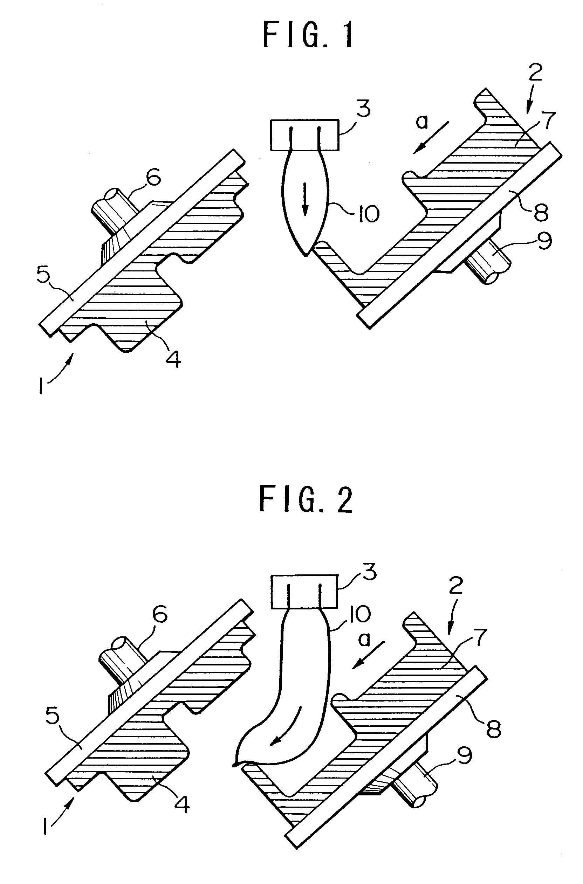

In the manufacture of the synthetic resin insulating container according to the preferred embodiment of the present invention, as shown in Fig. 1, a pair of metal molds 1 and 2 comprising forming blocks corresponding to the desired shape of the product, and an extruder capable of extruding the molding material between these metal molds, i.e., the resin, into a tubular shape are prepared. Here, only nozzle 3 at the tip of the aforementioned extruder is shown, as the main body of the extruder has been omitted from the Figure. The aforementioned metal mold 1 comprises metal mold main body 4, mounting board 5 which mounts this metal mold main body 4, and push rod 6 connecting to mounting board 5. Metal mold 2 comprises metal mold main body 7, mounting board 8 which mounts this metal mold main body 7, and push rod 9 connecting to mounting board 8.

Initially, the molding material of synthetic resin is extruded into a tubular shape of nozzle 3 of the extruder, and a parison 10 is formed. It is possible to employ a polyacetal resin as the aforementioned resin; however, the embodiment is not limited to only this material, as other resins such as hard PVC, polycarbonate, polyamide, polyethyleneterephthalate, polypropylene, polyethylenenaphthalate, cellulose plastics, and the like may also be appropriately used.

Subsequently, metal mold 2 is moved in the direction of arrow **a** in Fig. 1, and argon gas, xenon gas, krypton gas, or a mixed gas thereof is injected into parison 10. In this manner, parison 10 is inflated, and this swollen parison 10 is then slid along the block face of metal mold main body 5 of one metal mold 2 as shown in Fig. 2.

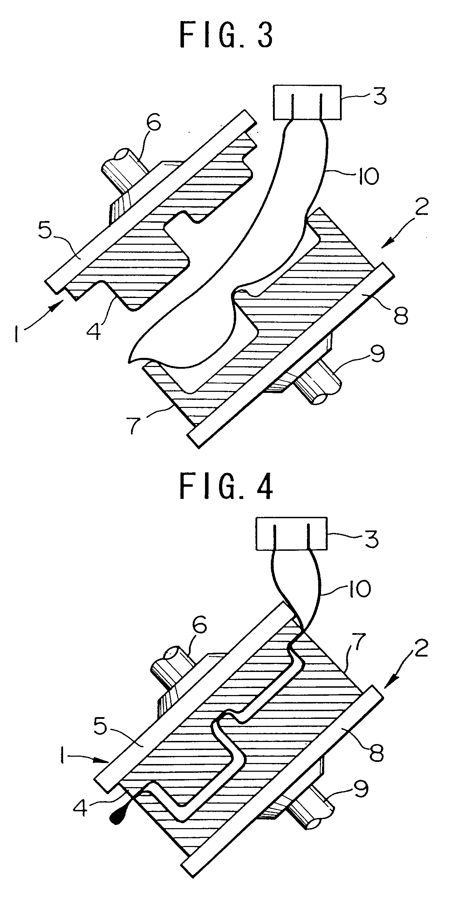

While further enlarging the aforementioned swollen parison 10, metal mold 2 is moved as shown in Fig. 3 until shaft center alignment of push rod 6 of metal mold 1 and push rod 9 of metal mold 2 is achieved, at which point the movement of metal mold 2 is terminated. In the aforementioned state, nozzle 3 is removed from its former position between metal molds 1 and 2.

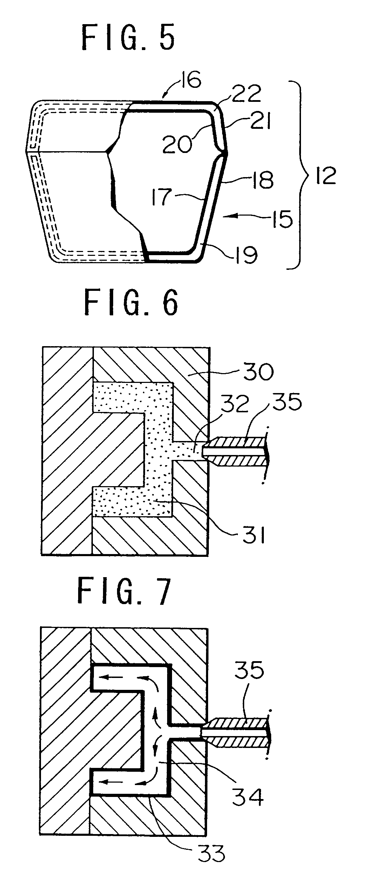

As shown in Fig. 4, push rods 6 and 9 are then extended, thereby pressing the metal mold main bodies of both metal molds against each other and sandwiching parison 10. In this manner, parison 10 sandwiched between metal molds 1 and 2 is deformed to form a synthetic resin insulating container 12 of a predetermined shape. The synthetic resin insulating container 12 shown in Fig. 5 is then obtained by means of separating metal molds 1 and 2 and removing the molded body formed therein.

The synthetic resin insulating container 12 shown in Fig. 5 comprises a container main body 15 and lid 16. Container main body 15 possesses a double-walled structure formed from container inner wall 17 and container outer wall 18, such that a sealed hollow layer 19 is formed in between the aforementioned container inner wall 17 and container outer wall 18. In addition, lid 16 also comprises a double-walled structure formed from lid inner wall 20 and lid outer wall 21 such that a sealed hollow layer 22 is formed in between lid inner wall 20 and lid outer wall 21. Both of the aforementioned sealed hollow layers 19 and 22 are formed at a thickness not greater than approximately 5 mm.

The aforementioned sealed hollow layers 19 and 22 are formed from argon gas, xenon gas, krypton gas, or a mixed gas thereof, and exhibit superior insulating properties since the thermal conductivities of xenon gas and krypton gas are sufficiently small at 0.52 × 10² W·m⁻¹·K⁻¹ (0°C) and 0.87 × 10² W·m⁻¹·K⁻¹ (0°C), respectively. Furthermore, the thermal conductivity of air is 2.41 × 10² W·m⁻¹·K⁻¹ (0°C), the thermal conductivity of nitrogen gas is 2.40 × 10² W·m⁻¹·K⁻¹ (0°C), and the thermal conductivity of argon gas is 1.63 × 10² W·m⁻¹·K⁻¹ (0°C). Therefore, as is clear from the aforementioned numbers, the thermal conductivities of xenon gas, krypton gas, and argon gas are low when compared with air or other gasses. By means of employing a gas of a low thermal conductivity as described in the aforementioned, when compared with the conventional urethane insulating container, equal or superior properties can be obtained while decreasing the thickness of the insulating layer by 50% or more; thus, it is possible to increase the volumetric efficiency.

In addition, the thickness of sealed hollow layers 19 and 22 are formed at 5 mm or less; thus, the gas convection phenomenon does not readily occur, which in turn results in improvement of the insulating properties.

According to the aforementioned manufacturing method, the resultant synthetic resin insulating container 12 can be manufactured by means of a single molding process, and, as a result, the manufacturing costs are extremely low. Furthermore, the resultant synthetic resin insulating container possessing a high volumetric efficiency exhibits superior insulating properties, several degrees above those exhibited by an air insulating layer, and also boasts a light weight which is significantly lighter than that of a resin insulating container employing urethane resin or the like in the insulating layer. In addition, sealed hollow layers 19 and 22 are filled with a gas, and thus differ from the conventional vacuum insulating system in that atmospheric pressure is not applied thereon. As a result, the degree of freedom with regard to the shape design is increased, and the formation of insulating containers possessing a variety of shapes such as an angular body or the like becomes possible.

In the aforementioned embodiment, formation of a synthetic resin vessel possessing a container-like shape was explained; however, it is also possible to easily form a synthetic resin insulating plate using the method of the present invention. In this case, the aforementioned method is executed using a pair of metal molds comprising molding blocks corresponding to the desired plate shape.

In addition, according to the aforementioned embodiment, a blow molding process for forming an insulating container by means of injecting various gases into parison 10 was described; however, it is also possible to use a molten resin by means of injecting molding, hence, the method of the present invention can also be applied to an injection molding process as well.

In other words, according to this method, it is possible to form the desired insulating vessel, as shown in Figs. 6 and 7, by means of closing premold 30, and injecting a molten synthetic resin into the molding space 31 within the aforementioned mold thorough injection opening 32. Subsequently, argon gas, krypton gas, xenon gas, or a mixed gas thereof is injected into the aforementioned, pressure is maintained, and the system is cooled to produce a synthetic resin wall 33 along the mold within forming space 31. Injection opening 32 is then sealed, and a vessel of a predetermined shape wherein the aforementioned gas fills space 34 is formed. In this manner, opening the mold results in the removal of the desired vessel. Nozzle 35 is provided into the injection opening 32 with the molten synthetic resin and the gas.

As described above, according to the present invention, a sealed hollow layer is provided comprising a gas of a low thermal conductivity such as argon gas, krypton gas, xenon gas, or a mixed gas thereof in the space within a double-walled structure possessing an inner wall and an outer wall formed from resin. Therefore, when compared with a resin insulating vessel using the conventional urethane resin in the insulating layer, an insulating vessel possessing superior insulating effects can be obtained according to the present invention. In addition, in the case when a container is formed as the above insulating vessel, when compared with the conventional resin insulating container, equal or superior insulating properties can be maintained while decreasing the thickness of the insulating layer by 50% or more; thus, according to the present invention, it is possible to provide an insulating container possessing a large volumetric efficiency.

Furthermore, according to the structure of the present invention, unlike in the vacuum insulating system of the conventional art, there is no bearing of atmospheric pressure; thus, it is possible to provide insulating vessels and insulating containers possessing various shapes from angular molds and the like.

Additionally, since the distance between the inner wall and outer wall is limited to 5 mm or less, it is possible to prevent convection of the argon gas, krypton gas, xenon gas, or mixed gas thereof therein, filling the space between the inner wall and the outer wall. As a result, it is possible to provide vessels formed from resin or insulating containers possessing superior insulating properties wherein convective heat transfer in the sealed hollow layer is decisively prevented.

Similarly, according to the method of the present invention, gas of a low thermal conductivity, i.e., argon gas, krypton gas, xenon gas, or a mixed gas thereof is injected into the interior of the parison formed in a tubular shape or injected into the molten synthetic resin injected into the interior of the mold. In the case of the parison, an insulating vessel comprising a double-walled structure is formed possessing a sealed hollow layer by means of sandwiching using a forming block. In the case of the molten resin, an insulating vessel is formed by means of injecting the aforementioned gas, maintaining pressure, and cooling the system. In this manner, it is possible to produce an insulating vessel possessing superior insulating effects by means of a simple work process when compared with the resin insulating vessel using conventional urethane resin in the insulating layer. In addition, in the case when a container is formed by means of the insulating vessel above, it is possible to reduce the thickness of the insulating layer by 50% or more when compared with the conventional resin insulating container while also maintaining equal or superior insulating properties; thus, the volumetric efficiency is also increased.

Furthermore, the manufacturing process is relatively simple when compared with that of the conventional vacuum insulating container; thus, it is possible to manufacture an inexpensive product. As a result, it is possible to provide an inexpensive insulating vessel, and also provide an insulating container which can be manufactured less expensively and at a lighter weight than the conventional insulating container which is filled with the powder of an inorganic substance.

## Claims

1. A synthetic resin insulating vessel characterized in comprising:
an inner wall formed from synthetic resin;
an outer wall formed from synthetic resin; and
space formed in between said inner wall and said outer wall;
wherein a sealed hollow layer is formed by means of filling said space using at least one type of gas selected from the group consisting of argon gas, xenon gas, and krypton gas.

2. A synthetic resin insulating vessel as recited in Claim 1, characterized in that the distance between said inner wall and said outer wall is not greater than 5 mm.

3. A synthetic resin insulating vessel characterized in comprising:
an inner container formed from synthetic resin;
an outer container formed from synthetic resin; and
a synthetic resin double-walled container integrally formed by means of providing a space between said inner container and said outer container;
wherein a sealed hollow layer is formed by means of filling said space using at least one type of gas selected from the group consisting of argon gas, xenon gas, and krypton gas.

4. A synthetic resin insulating vessel as recited in Claim 3, characterized in that the distance between said inner container and said outer container is not greater than 5 mm.

5. A synthetic resin insulating vessel as recited in Claim 3, characterized in that said synthetic resin double-walled container is formed from one type of plastic selected from the group consisting of a polyacetal resin, hard PVC, polycarbonate, polyamide, polyethyleneterephthalate, polypropylene, polyethylenenaphthalate, and cellulose plastic.

6. A method for manufacturing a synthetic resin insulating vessel, characterized in comprising the steps of:
extruding a molding material into a tubular shape to form a parison;
injecting at least one type of gas selected from the group consisting of argon gas, xenon gas, and krypton gas into the interior of said parison;
sandwiching said parison between a pair of molds; and
sealing the system to form a synthetic resin vessel possessing a double-walled structure comprising an inner wall, outer wall, and sealed hollow layer of said gas formed in between said inner wall and said outer wall.

7. A method for manufacturing a synthetic resin insulating vessel, characterized in comprising the steps of:
distributing a molten synthetic resin into a forming mold;
injecting a least one type of gas selected from the group consisting of argon gas, xenon gas, and krypton gas into said molten synthetic resin; and
sealing and cooling therein to form a synthetic resin vessel possessing a double-walled structure comprising an inner wall, outer wall, and sealed hollow layer of said gas formed between said inner wall and said outer wall.
